# EUROPEAN PATENT SPECIFICATION

(11) **EP 0 395 900 B1**
(45) Date of publication and mention of the grant of the patent: **14.12.1994**
(21) Application number: 90106437.8
(22) Date of filing: 04.04.1990
(51) Int. Cl.: C08L 71/12, C08K 3/38, C08K 5/52

(54) **Thermoplastic composition with boron compound**
Thermoplastische borenthaltende Zusammensetzung
Composition thermoplastique contenant du bore

(30) Priority: 01.05.1989 NL 8901093
(43) Date of publication of application: 07.11.1990
(73) Proprietor: GENERAL ELECTRIC COMPANY, Schenectady New York 10022 (US)
(72) Inventor: Hoeks, Theodorus Lambertus, NL-4600 AC Bergen op Zoom (NL); Claesen, Christianus Adrianus Arnoldus, NL-4600 AC Bergen op Zoom (NL); Lohmeijer, Johannes Hubertus Gabriel Marie, NL-4600 AC Bergen op Zoom (NL); Pickett, James Edward, NL-4600 AC Bergen op Zoom (NL)
(74) Representative: Pratt, Richard Wilson

(56) References cited:
- EP-A- 0 085 834
- EP-A- 0 334 296
- FR-A- 1 522 928
- FR-A- 1 567 368

## Description

The invention relates to a halogene free thermoplastic composition comprising a polymer component with at least 20% by weight of a polyphenylene ether, comprising 0.05 - 15 parts by weight per 100 parts by weight of the polyphenylene ether of a boron compound, comprising a tetraphenyl resorcinol diphosphate, but not comprising a compound with a P-N bond.

Polyphenylene ethers, sometimes abbreviated as PPE, are used on an ever increasing scale. They are high-melting-point materials and, for purposes of easier processing, they may optionally be mixed with styrene polymers or a plasticiser may be added. A rubber, for example, EPDM-rubber or rubber-modified polystyrene, is often added to improve the impact strength. The correct choice between these possibilities depends on the ultimate use. "Polyphenylene ethers" are to be understood to mean herein not only polymers as described in, for example, the United States Patent Specifications nos. 3,306,874 and 3,306,875 or in the United States Patent Specifications nos. 3,257,357 and 3,257,358, but also the various copolymers, as well as mixtures of polyphenylene ethers or copolyphenylene ethers with various other polymers, for example, the ones mentioned hereinbefore, the only requirement imposed being that the polymer component of the composition comprises at least 20% by weight of polyphenylene ether since the improvement of the invention to be described hereinafter will not be obtained when less than 20% is used.

For various important applications, for example, in aeroplanes, a high incombustibility and a low smoke development are required. PPE by itself meets in this respect the stringent incombustibility requirements. However, smoke evolution of the neat polymer is considerable. Processing of pure PPE is however very difficult. The most common way to improve the processability is to blend the PPE with polystyrene or high impact polystyrene. This increases however the combustibility and the smoke generation upon burning. Therefore, the combination of polyphenylene ether with a plasticiser is sometimes to be preferred for purposes with stringent flammability requirements. The plasticiser, too, must then not increase the flammability and the smoke development too much, which is why a plasticiser of a predominantly aromatic nature is generally to be preferred.

Furthermore the need exists for materials which in a fire do not form halogen-containing combustion gases. In the case of fire the actual fire damage often is smaller than the damage caused by the corrosion of buildings and apparatus by the halogen-containing and hence corrosive gases of combustion.

Another important characteristic of polypheny lene ether based thermoplastic compositions is its stability towards oxidation at elevated temperatures.

It has now been found that boron compounds, for example, borid acid, boron oxide or a borate in combination with specific phosphates are good flame-retardants, smoke suppressants and stabilisers and this not only for the combination of polyphenylene ether and plasticiser which is used when stringent combustibility requirements have to be met, but also for combinations which have to satisfy less stringent requirements and which comprise other constituents in combination with at least 20% of polyphenylene ether in their polymer component.

The stabilizing effect of boron compounds in combination with a compound having a P-N bond is known from US-A-3,816,562. It has now been found that such compound with a P-N bond does not need to be present to get a stabilising effect.

FR-A-1,567,368 describes the use of inorganic borates as flame retardant additive for polyphenylene ethers. The combination of borates with specific phosphates as claimed in this invention has not been disclosed in this French patent.

FR-A-1,522,928 describes the addition of a phosphorus compound and a boron oxide as stabilizers for polyphenylene ethers. Suitable phosphorus compounds according to this French patent are phosphites, derivates of phosphoric acid, polymeric phosphorus compounds such as cylic polyphosphates and linear higher phosphates.

The invention is based on the discovery that specific phosphates i.e. tetraphenyl resorcinol diphosphates show a synergistic effect in combination with a boron compound, with respect to smoke suppression and oxygen consumption upon burning. Other phosphates like triaryl phosphates do not show this synergistic effect.

The smoke suppressant effect of boron compounds in combination with halogene compounds is also known. It has now been found that in polyphenylene ether based compositions the presence of an halogene compound is not necessary.

Materials which comprise a polyphenylene ether, optionally a plasticiser and a flame-retardant are described in the non-pre-published Netherlands Patent Applications 8802502 and 8802919. As a flame-retardant the said materials always comprise a mixture of 0.2-15% by weight of a fluorinated polymer or copolymer and 0.05-10% by weight of a boron-containing compound.

It has now been found that good flame-retardant properties, and smoke suppression are also obtained without a fluorinated polymer or copolymer being used.

The invention therefore provides a material of the type mentioned above wherein the composition comprises 0.05-15 parts per weight of a boron compound per 100 parts by weight of the polyphenylene ether, and does not comprise a compound with a P-N bond.

As a boron compound may be used, for example, boric acid, B₂O₃, a borate salt or an organic borate. Boric acid or B₂O₃ is to be preferred.

In this connection it is to be noted that, although the invention has primarily been developed for polyphenylene ether-containing materials with a plasticiser, the invention also relates to compositions having less polyphenylene ether in the polymer component, for example, combinations of polyphenylene ether with high-impact polystyrene or rubbers, combinations which may comprise large or even predominant (up to 80% by weight) quantities of polystyrene or rubber. On the basis of their nature, these latter materials are much more combustible, but the combustibility thereof is also reduced by the boron compound, albeit that herewith not such a large inhibition of the combustibility and smoke development can be achieved as with the materials which consist predominantly of polyphenylene ethers.

Suitable plasticizers for the polymer composition according to the invention are the carboxylic esters of pentaerythritol and aromatic or alifatic acids, such as benzoic acid, substituted benzoic acid, stearic acid, octanoic acid or mixtures of such esters. The esters themselves can be mixed ester i.e. made out of a blend of several carboxylic acids eg. of benzoic acid and an alifatic carboxylic acid, octanoic acid and bisphenol-A. Also suitable are the phosphate esters of phosphoric acid and an aromatic alcohol, resorcinol and phenol eg. tetraphenyl resorcinol diphosphate and oligomers thereof, triphenylphosphate, phosphate of substituted phenols, like 2,6-dimethyl phenol. Another suitable plasticizer is triphenylphosphine oxide.

The composition of the invention may moreover comprise one or more additives conventionally used for such materials, for example, fillers, reinforcing fibres, stabilisers, pigments and dyes, plasticisers, mould release agents, agents to improve the notched impact value.

In so far as a sufficient difference exists between the processing temperature of the composition and the temperature at which the used boron compound can react with the polyphenylene ether or activates the polyphenylene ether in any manner, the boron compound used according to the invention may be incorporated in the composition at any desired instant, for example, by simply mixing the materials prior to the conventional extrusion or, optionally, during the extrusion, for example, approximately halfway or near the die head. Furthermore the addition may also be done during the final processing, for example, during injection moulding. Furthermore, a master batch may be prepared of the boron compound which may be added to the basic composition. In general this leads to a better distribution of the boron compound, as a result of which a better effect is obtained with the same concentration. When choosing among the various possibilities, one will in general be led by the said difference between the temperature at which the boron compound mixture becomes active and the processing temperature of the composition.

It is to be noted that the use of phosphonic acid salts as flame-retardants has been described in EP-A-0.245.207. These may be salts with a metal or metalloid from the group IIA, IIB, IIIA, and VA of the Periodic Table of the Elements. Although these include a boron compound, boron is not further mentioned; the preferred salts are aluminium salts. This prior art relates to compounds which exert their flame-retarding effect by flame poisoning. The boron compounds as used in the composition according to the invention function by carbonising the polymer constituents of the composition.

The composition according to the invention comprises by preference 0.1-10, most preferably 0,2-5 parts by weight of the boron compound per 100 parts by weight of the thermoplastic composition.

### Examples I and II

A material was prepared from 75 parts by weight of poly-(2,6-dimethyl-1,4-phenylene ether) having an intrinsic viscosity of 45 ml/g (measured in chloroform at 25° C), 12.5 parts by weight of a phosphate mixture consisting substantially of tetraphenylresorcinoldiphosphate, 7 parts by weight of poly-octenylene having an intrinsic viscosity of 94 ml/g (solution of 0.5 g in 100 ml of toluene), 2 parts by weight of boric acid and 5 parts by weight of crystal clear polystyrene. The said constituents were compounded in an extruder. (Example I). Standardized test pieces were injection-moulded from the resulting material to determine the impact strength according to Izod, the flame-retarding properties according to UL-94 and the smoke density according to ASTME-662 in DS units.

A second material was prepared with the same components as described hereinbefore in which, however, first a master batch consisting of 2 parts by weight of boric acid and 5 parts by weight of crystal clear polystyrene was prepared. 7 Parts by weight of the said master batch were compounded with the same quantities as indicated hereinbefore (Example II).

The resulting properties were as shown in table A:

**TABLE A**

| Example | | I no master batch | II with master batch |
|---|---|---|---|
| . Izod notched impact strength J/m | | 250 | 350 |
| . UL-value (1.6mm) | | V-0 | V-0 |

| . Smoke density (DS units) | | | |
|---|---|---|---|
| after | 1.5 min. | 2 | 0 |
| | 4.0 min. | 109 | 7 |
| | 8.0 min. | 156 | 40 |
| | 20.0 min. | 158 | 88 |

### Example III; comparative examples A, B and C

These examples demonstrate the stabilising effect of boron compounds against oxidation at elevated temperature. Three composition with a composition as shown in table B were prepared. The pellets, obtained after extrusion of the indicated constituents, were tested as follows. The oxidation rate was determined by measuring the oxygen take up at 124 ± 0.2°C in an atmosphere of pure oxygen (pressure 1 atmosphere). For that purpose always 1.00 g of pellets were brought into a glass tube con nected with a gas burette. After rinsing with pure oxygen and after reaching temperature equilibrium the level of the burette was read regularly. The milliliters of used oxygen were measured after intervals of 100, 200 and 400 hours. The obtained results are also recorded in table C.

As can be seen from table B the composition III according to the invention has a much lower oxygen consumption then the comparative compositions A, B and C. This shows that the compositions of the invention are more stable against oxidation at elevated temperatures.

**TABLE B**

| Example | A | B | C | III |
|---|---|---|---|---|
| Composition (parts by weight | | | | |
| . polyphenylene ehter | 100 | 75 | 75 | 75 |
| . benzoate | - | 15 | - | - |
| . polyoctenylene | - | - | 4.5 | 4.5 |
| . polystyrene | - | - | 7 | 5 |
| . boric acid | - | 2 | - | 2 |
| . tetraphenylresorcinol diphosphate | - | - | 13.5 | 13.5 |

| Consumed oxygen (ml) after | | | | |
|---|---|---|---|---|
| 100 hours | 10 | 3 | 16 | 3 |
| 200 hours | 22 | 10 | 26 | 10 |
| 400 hours | 42 | 21 | 36 | 21 |

## Claims

1. A halogene free thermoplastic composition comprising a polymer component with at least 20% by weight of a polyphenylene ether, comprising 0.05-15 parts by weight per 100 parts by weight of the polyphenylene ether of a boron compound, comprising a tetraphenyl resorcinol diphosphate, but not comprising a compound with a P-N bond.

2. Composition according to claim 1, comprising an ester of an alcohol and an organic or inorganic acid.

3. Composition according to claim 1, comprising triphenyl phosphine oxide.

4. Composition according to claims 1-3 wherein the boron compound is boric acid or B₂O₃.

5. Articles formed from the composition according to claims 1-4.

## Patentansprüche

1. Halogenfreie thermoplastische Zusammensetzung, umfassend eine Polymerkomponente mit mindestens 20 Gew.-% eines Polyphenylenethers, umfassend 0,05 bis 15 Gewichtsteile auf 100 Gewichtsteile des Polyphenylenethers einer Borverbindung, umfassend ein Tetraphenylresorcindiphosphat, aber ohne eine Verbindung mit einer P-N-Bindung.

2. Zusammensetzung nach Anspruch 1, umfassend einen Ester aus einem Alkohol und einer organischen oder anorganischen Säure.

3. Zusammensetzung nach Anspruch 1, umfassend Triphenylphosphinoxid.

4. Zusammensetzung nach den Ansprüchen 1 bis 3, worin die Borverbindung Borsäure oder B₂O₃ ist.

5. Gegenstände, die aus der Zusammensetzung gemäß den Ansprüchen 1 bis 4 geformt sind.

## Revendications

1. Composition thermoplastique exempte d'halogène, comportant un composant polymère ayant au moins 20% en poids de poly(phénylène éther), comportant 0,05 à 15 parties en poids, pour 100 parties en poids du poly(phénylène éther), d'un composé boré, comportant un tétraphényl-diphosphate de résorcinol, mais ne comportant pas de composé ayant une liaison P-N.

2. Composition selon la revendication 1, comportant un ester d'un alcool et d'un acide organique ou minéral.

3. Composition selon la revendication 1, comportant un oxyde de triphényl-phosphate.

4. Composition selon les revendications 1 à 3, dans laquelle le composé boré est de l'acide borique ou du B₂O₃.

5. Objets formés de la composition selon les revendications 1 à 4.
